# EUROPÄISCHE PATENTSCHRIFT

(11) **EP 0 618 156 B1**
(45) Veröffentlichungstag und Bekanntmachung des Hinweises auf die Patenterteilung: **23.10.1996**
(21) Anmeldenummer: 94710002.0
(22) Anmeldetag: 03.02.1994
(51) Int. Cl.: B65G 69/28, B65G 69/00

(54) **Gebäude mit einer Überfahrbrücke**
Building equipped with a loading bridge
Bâtiment équipé d'une passerelle de chargement

(30) Priorität: 27.03.1993 DE 4310788
(43) Veröffentlichungstag der Anmeldung: 05.10.1994
(73) Patentinhaber: Grunewald, Hans-Joachim, D-25368 Kiebitzreihe (DE)
(72) Erfinder: Grunewald, Hans-Joachim, D-25368 Kiebitzreihe (DE)
(74) Vertreter: Vonnemann, Gerhard, Dr.-Ing.

(56) Entgegenhaltungen:
- EP-A- 0 450 365
- DE-A- 3 003 033
- US-A- 4 574 543

## Beschreibung

Die Erfindung betrifft ein Gebäude, insbesondere Kühlhaus oder Gebäude mit erhöhter Innentemperatur, mit einer im Bereich seiner verschließbaren Gebäudeöffnung befindlichen Überfahrbrücke, deren an ihrem hinteren Ende um eine waagerechte Querachse verschwenkbare Brückenplatte sich über oder in einer Ausnehmung zum Hineinschwenken der Brückenplatte befindet und die an ihrem freien Ende mit einer ausfahrbaren und wieder einfahrbaren Verlängerung zum Auflegen auf die Plattform eines vor der Gebäudeöffnung befindlichen, zu be- bzw. entladenden Fahrzeuges versehen ist, wobei sich die Überfahrbrücke im Ruhezustand hinter dem heb-und senkbaren Gebäudeverschluß befindet, der in die Ausnehmung absenkbar ist und diese im abgesenkten Zustand vorne verschließt, wobei unterhalb der Ausnehmung eine Tasche zum Einführen von Verlademitteln des zu be- bzw. entladenden Fahrzeugs angeordnet ist.

Bei den bekannten Gebäuden dieser Art (US-PS 4,010,571), wird im geschlossenen Zustand des als Sektionaltor ausgebildeten Gebäudeverschlusses die erwähnte Ausnehmung nach vorn hin vollends abgeschlossen. Bei entsprechend ausgeführtem Gebäudeverschluß wird somit im geschlossenen Zustand des Verschlusses eine gute Wärmeisolation erreicht. Ein so ausgebildetes Gebäude ist jedoch nicht für solche Fahrzeuge geeignet, die an ihrem hinterem Ende zusammen mit dem erwähnten Überfahrbrücken nicht benutzbare Hubplattformen aufweisen, welche bei Benutzung der Überfahrbrücke in die untere Endstellung gefahren werden müssen, in der sie vom Fahrzeug nach hinten abstehen.

Dieses Problem wird bei einem Gebäude mit einer Überfahrbrücke gemäß DE 30 03 033 dadurch vermieden, daß unterhalb der Ausnehmung eine Tasche vorgesehen ist und zur Vermeidung von Wärme- bzw. Kälteverlusten der Grund der Ausnehmung von einer isolierenden Wandung gebildet ist, die die unterhalb der Ausnehmung befindliche Tasche zum Einführen von Verlademitteln des zu be- bzw. entladenden Fahrzeugs nach oben hin begrenzt.

Auf diese Weise können die in der unteren Endstellung befindlichen, nach hinten abstehenden Verlademittel in die erwähnte Tasche eingeführt werden, wenn das Fahrzeug an das Gebäude herangefahren wird. Es kann dann ein ungestörter Lage- bzw. Entladebetrieb stattfinden.

Bei den Gebäuden dieser Art wird der Gebäudeverschluß lediglich bis auf einen quer über die Ausnehmung verlaufenden Träger gefahren, so daß die darunter befindliche Tasche für das Einführen der Verladehilfsmittel des zu be- bzw. entladenden Fahrzeugs ständig belüftet wird. Über die isolierende Wandung hin zur darunter befindlichen Tasche kann somit auch in Zeiten, bei denen kein Verladen erfolgt, Wärme ausgetauscht werden, d.h. bei Kühlhäusern geht darüber ständig mehr Kälte verloren als es beispielsweise bei den Gebäuden der Fall ist, deren Gebäudeverschluß vollständig abgesenkt werden kann.

Der Erfindung liegt deshalb die Aufgabe zugrunde, bei Gebäuden der eingangs genannten Art, die Wärme- bzw. Kälteverluste zu verringern.

Diese Aufgabe wird dadurch gelöst, daß die Tasche zur Außenseite des Gebäudes ein von dem heb- und senkbaren Gebäudeverschluß getrennt zu öffnenden und zu schließenden isolierenden Taschenverschluß aufweist. Auf diese Weise wird die gesamte Einfahrtasche direkt an der Außenwand des Gebäudes verschlossen. Dadurch verringert sich vorteilhaft die Oberfläche, über die ein Wärmeaustausch möglich ist. Der Querschnitt der Einfahrtasche ist nämlich üblicherweise kleiner, als der Grund an der Ausnehmung für die Überfahrbrücke. Vor dem Andocken eines LkW kann der Taschenverschluß geöffnet werden, ohne daß gleichzeitig der Gebäudeverschluß geöffnet werden müßte. Der LkW fährt mit seiner abgesenkten Ladeplattform in die Tasche ein. Erst wenn die Hinterkante des Fahrzeugs zur Anlage an eine meist gebäudeseitig vorgesehene Dichtung anliegt, wird der Gebäudeverschluß und die Ladeöffnung des Fahrzeugs geöffnet.

Für den Taschenverschluß ist vorgesehen, daß der Taschenverschluß als Wandung ausgebildet ist, die den Abstand zwischen einem quer laufenden Träger und dem Boden der Tasche überbrückt.

In Verbindung damit, daß die Wandung sich nach innen bewegend, vorzugsweise klappend, ausgebildet ist, wobei sich insbesondere die Wandung um eine horizontal, vorzugsweise oben angeordnete, Achse bewegend ausgebildet sein kann, wird die isolierende Wandung während des Verladevorgangs zum teilweisen Abdecken des Grundes der Ausnehmung genutzt, so daß auch während des Verladevorgangs die Wandung noch teilweise isolierend wirkt.

Die Maßnahme, daß der Grund der Ausnehmung nur zu einem Teil von einer isolierenden Wandung bedeckt ist, dient der zusätzlichen Isolation der Tasche nach oben, während des Verladevorgangs. Dadurch, daß der von der Klappe im geöffneten Zustand nicht bedeckte Grund der Ausnehmung zusätzlich isoliert ist, werden auch während des Verladevorgangs die Wärmeverluste verringert. Da die Zeiten, an denen Verladevorgänge stattfinden, kurz und selten sind, ist die Wirkung des isolierenden Taschenverschlusses während der übrigen Zeiten in der Summe größer als die Isolierung der Ausnehmung.

Zur Erleichterung der Handhabung ist vorgesehen, daß die Wandung kraftbetätigbar mittels Antrieben ausgebildet ist, wobei zur Erzeugung eines Betätigungsbefehls vorzugsweise Sensoren vorgesehen sind, die das Vorhandensein eines einfahrenden Verlademittels erkennend ausgebildet sind. Solche Sensoren können beispielsweise Lichtschranken oder Näherungsinitiatoren als auch in die Verkehrsfläche vor der Gebäudeöffnung eingelassene Sensoren sein. Diese erhalten Wirkverbindungen zu einer zur Überladebrücke gehörenden Steuerung, die auch die übrigen notwendigen Bewegungsfunktionen der Überfahrbrücke koordiniert zur Verfügung stellt.

Wenn der Träger als Winkelprofil mit einem vertikalen vorderen und einem horizontalen oberen Schenkel ausgebildet ist, kann die horizontale Fläche des Winkels als Auflage für den Gebäudeverschluß dienen, während der vordere Schenkel gleichzeitig als Halterung für den Taschenverschluß dient und die mechanischen Glieder zum Bewegen des Taschenverschlusses schützt.

Dadurch, daß die Wandung eine Breite aufweist, die die des Gebäudeverschlusses übersteigt, kann der Gebäudeverschluß so klein wie möglich konstruktiv ausgelegt werden und dadurch der Wärmeaustausch im geschlossenen Zustand vermindert werden. Die Tasche kann dagegen unabhängig davon in ihrer Breite so ausgeführt werden, daß die andockenden Fahrzeuge eine entsprechend ihrer Breite notwendige Taschengröße unter Berücksichtigung zusätzlicher Einfahrtoleranzen zur Verfügung gestellt bekommen.

Mit geringem Aufwand läßt sich die Erfindung verwirklichen, wenn die Wandungen an Führungen verfahrbar, vorzugsweise nach oben in eine horizontale Lage verfahrbar, ausgebildet ist. Solche Lösungen sind technisch beispielsweise für Sektionaltore bekannt und sind betriebssicher mit marktgängigen Standardteilen kostengünstig zu verwirklichen.

Wenn die Wandung eine Länge aufweist, die an die Tiefe der Ausnehmung angepaßt ausgebildet ist, deckt im geöffneten Zustand der Taschenverschluß auch den Grund der Ausnehmung vollständig ab, so daß Wärmeverluste während des Be- und Entladevorgang minimiert sind.

Die Maßnahme, daß die Wandung faltbar ist, verbessert die Isolierung im geschlossenen Zustand der Tasche. Dabei liegen die einzelnen Segmente des gefalteten Taschenverschlusses aufeinander und addierten sich somit in ihrer isolierenden Wirkung. Durch geeignete mechanische Anlenkung der Segmente schwenken sie beim Einfahren der Verlademittel durch das Fahrzeug von diesem getrieben in die oberen, im wesentlichen horizontale Stellung, in der sie den Grund der Ausnehmung isolieren. Dieser selbsttätige Vorgang, der zum Entfalten des Taschenverschlusses seine Energie aus dem andockenden Fahrzeug bezieht, kann natürlich auch motorisch bewirkt werden.

Zur Vermeidung, daß beim Einführen von Verlademitteln in die Tasche die untere Kante des Klappenverschlusses sich mit dem Verlademittel verhakt oder reibt und dabei Schaden nimmt, ist vorgesehen, daß die Wandung an ihrer untersten Kante und/oder auf ihrer Außenseite mindestens eine Rolle aufweist.

Auch die Maßnahme, daß die Wandung eine Außenfläche aufweist, die gekrümmt ausgebildet ist, dient dem leichteren Aufgleiten des Klappenverschlusses auf Verlademitteln des andockenden Fahrzeugs.

Weitere Vorteile, Einzelheiten und erfindungswesentliche Merkmale ergeben sich aus der nachfolgenden Beschreibung von bevorzugten Ausführungsformen der Erfindung unter Bezugnahme auf die beigefügten Figuren. Diese zeigen im einzelnen:
- Fig. 1: einen schematisierten Vertikalschnitt durch eine Gebäudeöffnung gemäß Schnittmarkierung I-I in Figur 2,
- Fig. 2: die Hälfte eines schematisierten Horizontalschnitts durch die Gebäudeöffnung gemäß Schnittmarkierung II-II in Figur 3,
- Fig. 3: die rechte Hälfte einer frontalen Ansicht der Gebäudeöffnung gemäß Pfeil III in Figur 1,
- Fig. 4: einen schematisierten Vertikalschnitt gemäß Figur 1 durch die Gebäudeöffnung mit verändertem Taschenverschluß in geänderter Ausführung,
- Fig. 5: einen schematisierten Vertikalschnitt durch die Gebäudeöffnung mit einem weiteren Taschenverschluß in geänderter Ausführung und
- Fig. 6: einen schematisierten Vertikalschnitt durch die Gebäudeöffnung mit einem weiteren Taschenverschluß in geänderter Ausführung.

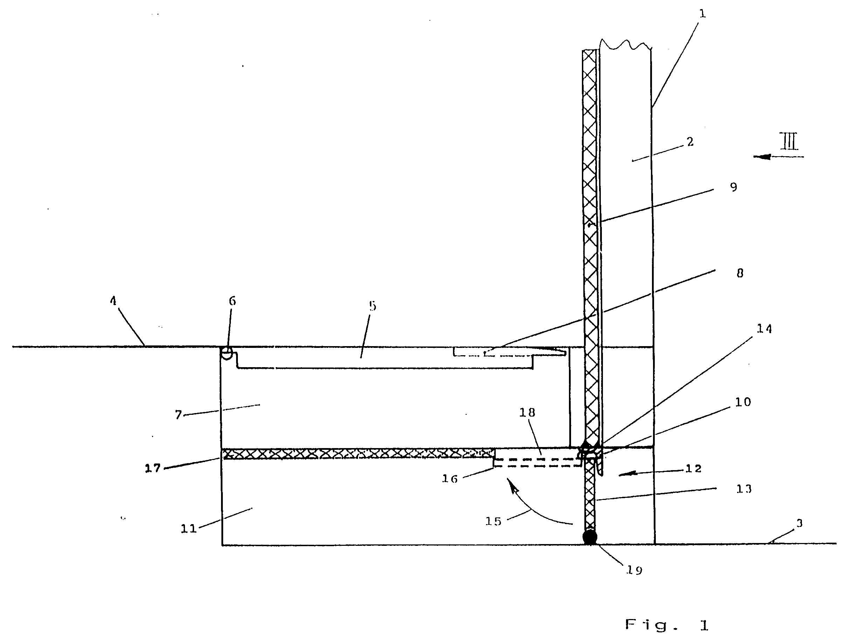

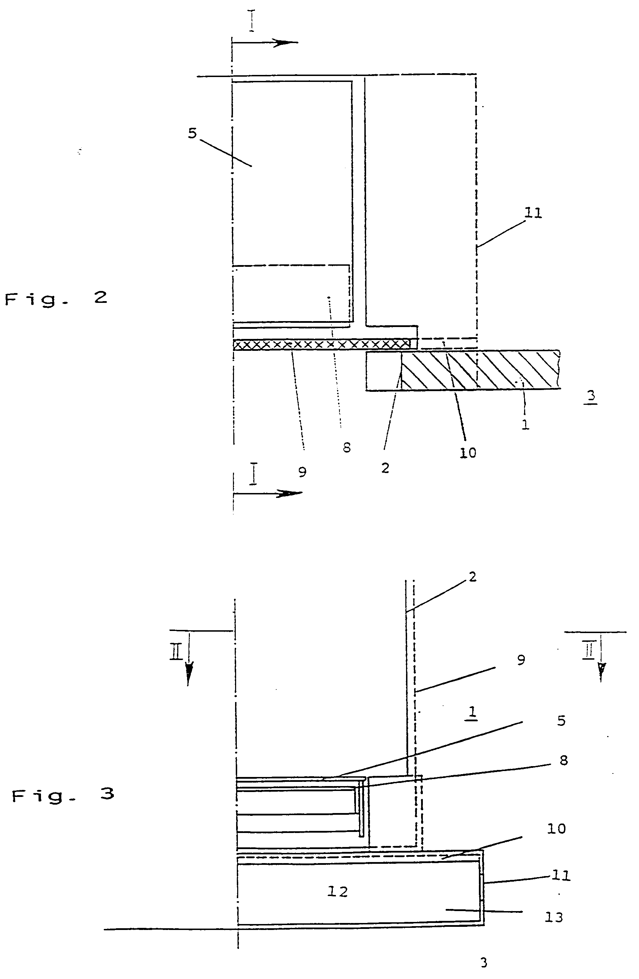

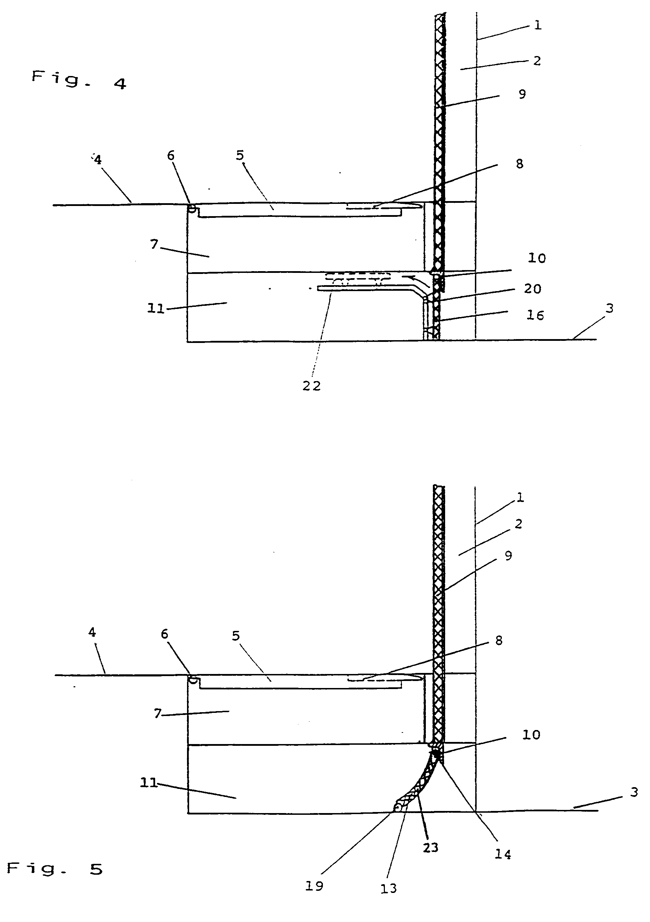

In Figur 1 ist mit 1 die Gebäudeaußenwand bezeichnet mit einer torartige Öffnung 2. Davor befindet sich eine Verkehrsfläche 3 für Fahrzeuge oder dergleichen, die be- oder entladen werden sollen.

Innerhalb des Gebäudes liegt eine Verkehrsfläche 4 für Flurförderzeuge auf einem Niveau, das in etwa dem üblichen Niveau der Pritsche andockender zu be- bzw. entladender Fahrzeuge entspricht. Die Pritschenhöhe andockender Fahrzeuge variiert infolge unterschiedlicher Beladung, so daß sich Niveauunterschiede zu der Verkehrsfläche 4 ergeben. Diese Niveauunterschiede werden von einer Überfahrbrücke 5 überbrückt, die an ihrem hinteren Ende mittels eines geeigneten Gelenks 6 schwenkbar in einer rechteckigen Ausnehmung 7 angelenkt, um so nach oben oder unten verschwenken zu können. Die Hub- und Haltekräfte können dabei von einem der Übersichtlichkeit halber nicht dargestellten Arbeitszylinder aufgenommen werden, dessen Kolbenstange die Überfahrbrücke 5 im Bereich ihres vorderen Ende unterfängt. Der Arbeitszylinder stützt sich dabei vorzugsweise auf einem steifen Träger im vorderen Bereich ab, der an den seitlichen Wandungen befestigt ist, die die Ausnehmung zur Seite hin begrenzen.

Die Überfahrbrücke 5 ist an ihrem freien Ende mit einer aus- und wieder einfahrbaren Verlängerung 8 versehen, über die sich die Überfahrbrücke 5 auf der Pritsche eines andockenden Fahrzeuges abstützen kann. Mit dieser Verlängerung 8 wird also der Spalt zwischen der Überfahrbrücke 5 und der Pritsche des Fahrzeugs überbrückt.

Die Öffnung 2 ist durch ein heb- und senkbares Sektionaltor 9 verschlossen, dessen Sektionen aus einem guten Wärmeisolator besteht. Dieses Tor kann auch durch andere, zweckmäßigerweise auf- und abbewegbare Einrichtungen, z.B. Rolltore, ersetzt werden, unter der Voraussetzung, daß es auch im Bedarfsfalle den wärmetechnischen Wünschen entspricht.

Das Tor ist so bemessen, daß es mit seinem unteren Ende auf dem Grund der Ausnehmung 7 aufliegen kann. Das Tor verschließt also nicht nur die Öffnung 2, sondern auch die Ausnehmung 7 nach vorn hin. Dabei stützt sich das Tor 9 auf einem die gesamte Breite der Ausnehmung 7 überspannenden Träger 10 auf. Unterhalb dieses Trägers ist eine Tasche 11 vorgesehen, in die ggf. am Fahrzeug vorhandene Ladehilfen oder dergleichen eingeführt werden können, welche jedoch im allgemeinen in Verbindung mit Überfahrbrücken keine Verwendung finden. Sie können also während des Brückenbetriebes in der Tasche 11 eingeschoben untergebracht werden. Diese Tasche 11 ist über die seitlichen Wandungen der Ausnehmung 7 hinaus seitlich erweitert, um den Verladehilfsmitteln auch bei ungenauem Anfahren genügend Platz bieten zu können.

Diese Tasche 11 wird zur Gebäudeaußenseite hin von einem Taschenverschluß 12, der aus einer isolierenden Wandung 13 besteht, geschlossen. Dieser Taschenverschluß 12 besteht aus einem guten Wärmeisolator, beispielsweise Isopaneel, das im Bereich der oberen Kante mittels geeigneter Gelenke 14 schwenkbar angelenkt ist, so daß das Isopaneel 13 gemäß Pfeilrichtung 15 in die in unterbrochener Linienführung dargestellte horizontale Lage verschwenkt werden kann. Zusätzlich kann der Grund der Ausnehmung 7 auch teilweise von einer weiteren isolierenden Wandung 17 verschlossen sein. Dabei wird die verbleibende Öffnung 18 durch den in die horizontale Position geschwenkten Taschenverschluß 12 verschlossen. Auf diese Weise ich auch während des Be- bzw. Entladevorgangs eine Wärmeisolation der Ausnehmung 7 von unten gegeben.

Die Schwenkbewegung in Pfeilrichtung 15 kann durch einen einzufahrendes Verladehilfsmittel des andockenden Fahrzeugs selbst bewirkt werden. Dies kann entweder durch geeignete Sensoren kraftbetätigt erfolgen oder aber dadurch, daß zunächst das Verlademittel des Fahrzeugs an den Taschenverschluß 12 herangefahren wird, bis die Vorderkante des Verlademittels den Verschluß in Pfeilrichtung 15 drängt. Zur Vermeidung übermäßiger Reibung kann die vordere Fläche des Verschlusses 12 entsprechend armiert sein, und zusätzlich auf oder in der Außenfläche Rollen vorgesehen sein. Der Übersichtlichkeit halber ist eine Rolle 19 nur an der unteren Kante des Verschlusses 12 in Figur 1 dargestellt. Beim Einfahren rollt somit die Hubplattform des Fahrzeuges unter Rolle 19 des Verschlusses 12 durch. Die Rolle 19 verhindert auch ein Verhaken des Verschlusses an vorspringenden Kanten der Verladeplattform beim Ausfahren.

Auf diese Weise ist ein Gebäude mit einer verschließbaren Gebäudeöffnung geschaffen, das bei sehr guter Wärmeisolation trotzdem das Einfahren von Verlademitteln eines zu be- bzw. entladenden Fahrzeugs ermöglicht.

In Figur 4 ist eine alternative Ausführungsform des Taschenverschlusses dargestellt, bei dem das Isopaneel 16 in seitlichen Führungen 20 aufgenommen ist. Führung 20 bewirkt, daß Isopaneel 16 entsprechend Pfeilrichtung 21 nach oben und durch die abgewinkelte Gestaltung der Führungen anschließend in eine horizontale Lage bewegt wird, was in unterbrochener Linienführung 22 dargestellt ist. Führungen 20 können zum hinteren Ende der Tasche 11 hin auch weiter verlängert werden und zusätzliche, an die Tiefe der Tasche 11 angepaßte Paneele führen, so daß wiederum die Tasche 7 auch unten während des Verladevorgangs isoliert ist. Der Übersichtlichkeit halber ist hier nur ein Paneel 16 dargestellt, das manuell oder kraftbetätigt die Tasche 11 verschließt bzw. öffnet.

In Figur 5 ist eine alternative Ausgestaltung des Isopaneels mit gekrümmter Oberfläche 23 dargestellt. Diese Krümmung erleichtert das Aufgleiten und wieder Zurückgleiten des Isopaneels 13 auf einer einfahrenden bzw. ausfahrenden Hubplattform. Zusätzlich ist an der unteren Kante eine Rolle 19 vorgesehen, die dem gleichen Zweck dient.

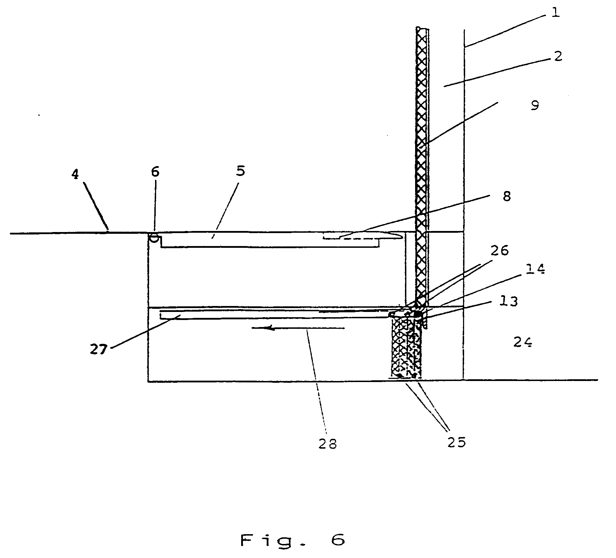

Schließlich zeigt Figur 6 einen Klappenverschluß mit vier gefalteten Isopaneelen 24, von den jeweils zwei mittels zweier unterer Gelenke 25 und dreier oberer Gelenke 26 miteinander alternierend verbunden sind und dadurch gefaltet aufeinander zur Anlage kommen. Die außenseitige Paneele 13 ist mit ihrer oberen Kante an dem festen Gelenk 14 angelenkt, während die beiden anderen oberen Gelenke 26 in Führung 27 horizontal geführt sind. Durch Bewegen der oberen Gelenke 26 in horizontaler Richtung 28 können die Paneele in eine gestreckte horizontale Lage verbracht werden. Diese Bewegung kann sowohl kraftbetätigt mittels entsprechender Motoren oder Zylinder geschehen oder durch einfahrenden Ladehilfsmittel des Fahrzeugs selbsttätig erfolgen. Zur Kopplung der Bewegung der einzelnen gefalteten Paneele sind dann jedoch entsprechende geeignete mechanische Getriebe vorzusehen.

Ein nicht zu unterschätzender Vorteil dieses Taschenverschlusses ist auch der Effekt, daß die Taschen dadurch gleichzeitig gegen Verschmutzung geschützt sind. Durch Wind werden häufig in diese Taschen Laub und Papier eingeweht, wo es liegenbleibt. Da die Taschen sehr niedrig sind, fällt die Reinigung von solchem Unrat schwer. Der Taschenverschluß vermeidet häufige Reinigungsarbeiten.

### BEZUGSZEICHENLISTE

- 1: Gebäudeaußenwand
- 2: torartige Öffnung
- 3: Verkehrsfläche
- 4: Verkehrsfläche
- 5: Überfahrbrücke
- 6: Gelenk
- 7: Ausnehmung
- 8: Verlängerung
- 9: Tor
- 10: Träger
- 11: Tasche
- 12: Taschenverschluß
- 13: ISO-Paneele
- 14: Gelenke
- 15: Pfeilrichtung
- 16: ISO-Paneele
- 17: Wandung
- 18: Öffnung
- 19: Rolle
- 20: Führungen
- 21: Pfeilrichtung
- 22: horizontale Lage
- 23: gekrümmte Oberfläche
- 24: ISO-Paneele
- 25: unteres Gelenk
- 26: oberes Gelenk
- 27: Führung
- 28: Pfeilrichtung

## Patentansprüche

1. Gebäude (1), insbesondere Kühlhaus oder Gebäude mit erhöhter Innentemperatur, mit einer im Bereich seiner verschließbaren Gebäudeöffnung (2) befindlichen Überfahrbrücke (5), deren an ihrem hinteren Ende um eine waagerechte Querachse (6) verschwenkbare Brückenplatte sich über oder in einer Ausnehmung (7) zum Hineinschwenken der Brückenplatte befindet und die an ihrem freien Ende mit einer ausfahrbaren und wieder einfahrbaren Verlängerung (8) zum Auflegen auf die Plattform eines vor der Gebäudeöffnung befindlichen, zu be- bzw. entladenden Fahrzeuges versehen ist, wobei sich die Überfahrbrücke im Ruhezustand hinter dem heb- und senkbaren Gebäudeverschluß (9) befindet, der in die Ausnehmung absenkbar ist und diese im abgesenkten Zustand vorne verschließt, wobei unterhalb der Ausnehmung eine Tasche (11) zum Einführen von Verlademitteln des zu be- bzw. entladenden Fahrzeugs angeordnet ist, **dadurch gekennzeichnet,** daß die Tasche (11) zur Außenseite des Gebäudes (1) ein von dem heb- und senkbaren Gebäudeverschluß (9) getrennt zu öffnenden und zu schließenden isolierenden Taschenverschluß (12) aufweist.

2. Gebäude nach Anspruch 1, **dadurch gekennzeichnet,** daß der Taschenverschluß (12) als Wandung (13) ausgebildet ist, die den Abstand zwischen einem quer laufenden Träger (10) und dem Boden der Tasche (11) überbrückt.

3. Gebäude nach Anspruch 1 oder 2, **dadurch gekennzeichnet,** daß die Wandung (13) sich nach innen bewegend, vorzugsweise klappend, ausgebildet ist, wobei sich insbesondere die Wandung um eine horizontal, vorzugsweise oben angeordnete, Achse bewegend ausgebildet sein kann.

4. Gebäude nach Anspruch 1, 2 oder 3, **dadurch gekennzeichnet,** daß der Grund der Ausnehmung (7) nur zu einem Teil von einer isolierenden Wandung (17) bedeckt ist.

5. Gebäude nach Anspruch 1, 2, 3 oder 4, **dadurch gekennzeichnet,** daß die Wandung (13) kraftbetätigbar mittels Antrieben ausgebildet ist, wobei zur Erzeugung eines Betätigungsbefehls vorzugsweise Sensoren vorgesehen sind, die das Vorhandensein eines einfahrenden Verlademittels erkennend ausgebildet sind.

6. Gebäude nach Anspruch 1, 2, 3, 4 oder 5, **dadurch gekennzeichnet,** daß der Träger (10) als Winkelprofil mit einem vertikalen vorderen und einem horizontalen oberen Schenkel ausgebildet ist.

7. Gebäude nach Anspruch 1, 2, 3, 4, 5 oder 6, **dadurch gekennzeichnet,** daß die Wandung (13) eine Breite aufweist, die die des Gebäudeverschlusses (9) übersteigt.

8. Gebäude nach Anspruch 1, 2, 3, 4, 5, 6 oder 7, **dadurch gekennzeichnet,** daß die Wandungen (13) an Führungen (20, 27) verfahrbar, vorzugsweise nach oben in eine horizontale Lage verfahrbar, ausgebildet ist.

9. Gebäude nach Anspruch 1, 2, 3, 4, 5, 6, 7 oder 8, **dadurch gekennzeichnet,** daß die Wandung (13) eine Länge aufweist, die an die Tiefe der Ausnehmung (7) angepaßt ausgebildet ist.

10. Gebäude nach Anspruch 1, 2, 3, 4, 5, 6, 7, 8 oder 9, **dadurch gekennzeichnet,**daß die Wandung (13) faltbar ist.

11. Gebäude nach Anspruch 1, 2, 3, 4, 5, 6, 7, 8, 9 oder 10, **dadurch gekennzeichnet,** daß die Wandung (13) an ihrer untersten Kante und/oder auf ihrer Außenseite mindestens eine Rolle (19) aufweist.

12. Gebäude nach Anspruch 1, 2, 3, 4, 5, 6, 7, 8, 9, 10 oder 11, **dadurch gekennzeichnet,** daß die Wandung (13) eine Außenfläche aufweist, die gekrümmt ausgebildet ist.

## Claims

1. Building (1), in particular cold storage depot or building with enhanced indoor temperature, having a loading bridge (5) positioned in the area of its lockable building opening (2), the bridge-plate of which is slewable at its rear end around a lateral axis (6) and is mounted above or in a recess (7) for swinging in said bridge-plate and which is equipped at its free end with an extendible and retractable projection (8) for resting on the platform of a vehicle standing in front of the building opening for being loaded or unloaded, wherein the loading-bridge in its state of rest is positioned behind the riseable and lowerable building-closure (9), which is lowerable into the recess and on the front side locking it in its lowered position, whereby a pocket (11) for inserting loading equipment of the vehicle to be loaded or unloaded is disposed below the recess,
characterised in that
the pocket (11) comprises on the outside of the building an insulating pocket closure (12), which can be opened and closed independently of the building closure (9).

2. Building according to claim 1 characterised in that the pocket closure (12) is formed as a wall (13), which spans the distance between a cross running sustainer (10) and the bottom of the pocket (11).

3. Building according to claim 1 or 2, characterised in that the wall (13) can be moved towards the inner side, preferably by tilting, and in particular the wall can be tilted around a horizontal axis, which is preferably positioned on the upper end.

4. Building according to claim 1, 2 or 3, characterised in that the bottom of the recess (7) is only partially covered by an insulating wall (17).

5. Building according to claim 1, 2, 3 or 4, characterised in that the wall (13) can be moved by drives, wherein sensors are provided capable of sensing the presence of insertable loading equipment for producing an actuation signal.

6. Building according to claim 1, 2, 3, 4 or 5, characterised in that the sustainer (10) takes the form of a cornered profile with a vertical front and a horizontal upper leg.

7. Building according to claim 1, 2, 3, 4, 5, or 6, characterised in that the wall (13) is broader than the building-closure (9).

8. Building according to claim 1, 2, 3, 4, 5, 6 or 7, characterised in that the wall (13) can be moved along guiding devices (20, 27), preferably upwards into a horizontal position.

9. Building according to claim 1, 2, 3, 4, 5, 6, 7 or 8, characterised in that the wall (13) has a length, which is adapted to the depth of the recess (7).

10. Building according to claim 1, 2, 3, 4, 5, 6, 7, 8 or 9, characterised in that the wall (13) is foldable.

11. Building according to claim 1, 2, 3, 4, 5, 6, 7, 8, 9 or 10, characterised in that the wall (13) comprises at least one roller (19) at its lower edge and/or at the outer side.

12. Building according to claim 1, 2, 3, 4, 5, 6, 7, 8 9, 10 or 11, characterised in that the wall has a curved outer surface.

## Revendications

1. Bâtiment (1) en particulier entrepôt frigorifique ou bâtiment avec une température intérieure élevée, avec une passerelle de transbordement (5) se trouvant dans la zone de l'ouverture du bâtiment (2) que l'on peut fermer, passerelle de transbordement, qui peut pivoter autour de son axe transversal horizontal (6) à son extrémité arrière, et qui se trouve au-dessus ou dans un évidemment (7) qui sert à faire pivoter dedans la passerelle de transbordement, et qui à son extrémité libre est pourvue d'un prolongement (8), qui peut sortir et être à nouveau rentré pour mettre sur la plate-forme un véhicule, qui se trouve devant l'ouverture du bâtiment, véhicule à charger ou à décharger, la passerelle de transbordement se trouvant quand elle est au repos, derrière la fermeture (9) du bâtiment que l'on peut lever ou abaisser, et que l'on peut abaisser dans l'évidement et qui ferme celui-ci vers l'avant, quand elle est en position abaissée, une fosse (11) étant disposée en dessous de l'évidement pour introduire les organes de chargement du véhicule à charger ou à décharger,
caractérisé en ce que
la fosse (11) présente en direction de la face extérieure du bâtiment (1) une fermeture de fosse (12) isolante pouvant s'ouvrir et se fermer de façon séparée par rapport à la fermeture du bâtiment (9) qui, elle, peut se lever ou s'abaisser.

2. Bâtiment selon la revendication 1,
caractérisé en ce que
la fermeture de fosse (12) est constituée comme une paroi (13), qui comble la distance entre un support (10) qui s'étend transversalement et le fond de la fosse (11).

3. Bâtiment selon la revendication 1 ou 2,
caractérisé en ce que
la paroi (13) est constituée de façon à se déplacer vers l'intérieur, de préférence en se repliant, la paroi pouvant être constituée en particulier de façon à se déplacer autour d'un axe disposé horizontalement, de préférence en haut.

4. Bâtiment selon la revendication 1, 2 ou 3,
caractérisé en ce que
le fond de l'évidement (7) n'est recouvert qu'en partie par une paroi isolante (17).

5. Bâtiment selon la revendication 1, 2, 3 ou 4,
caractérisé en ce que
la paroi (13) est constituée de façon à pouvoir être actionnée mécaniquement au moyen d'un mécanisme d'entraînement, de préférence des détecteurs étant prévus pour produire un ordre d'actionnement, détecteurs qui sont constitués de façon à détecter un organe de chargement/déchargement qui avance.

6. Bâtiment selon la revendication 1. 2, 3, 4 ou 5,
caractérisé en ce que
le support (10) est constitué sous la forme d'une cornière profilée avec une aile antérieure verticale et une aile supérieure horizontale.

7. Bâtiment selon la revendication 1, 2, 3, 4, 5 ou 6,
caractérisé en ce que
la paroi (13) présente une largeur, qui dépasse celle de la fermeture du bâtiment (9).

8. Bâtiment selon la revendication 1, 2, 3, 4, 5, 6 ou 7,
caractérisé en ce que
les parois (13) sont constituées de façon à pouvoir se déplacer sur des guidages (20, 27), et en particulier à se déplacer vers le haut dans une position horizontale.

9. Bâtiment salon la revendication 1, 2, 3, 4, 5, 6, 7 ou 8,
caractérisé en ce que
la paroi (13) présente une longueur qui est constituée de façon à s'adapter à la profondeur de l'évidement (7).

10. Bâtiment selon la revendication 1, 2, 3, 4, 5, 6, 7, 8 ou 9,
caractérisé en ce que
la paroi (13) est repliable.

11. Bâtiment selon la revendication 1, 2, 3, 4, 5, 6, 7, 8, 9 ou 10,
caractérisé en ce que
la paroi (13) présente sur son bord le plus bas et/ou sur sa face extérieure au moins un galet (19).

12. Bâtiment selon la revendication 1, 2, 3, 4, 5, 6, 7, 8, 9, 10 ou 11,
caractérisé en ce que
la paroi (13) présente une surface extérieure qui est constituée de façon recourbée.
